# EUROPÄISCHE PATENTSCHRIFT

(11) **EP 1 794 673 B1**
(45) Veröffentlichungstag und Bekanntmachung des Hinweises auf die Patenterteilung: **30.05.2018**
(21) Anmeldenummer: 05786903.4
(22) Anmeldetag: 23.09.2005
(51) Int. Cl.: G06F 9/46, G06F 9/445

(54) **VERFAHREN ZUM VERTEILEN VON SOFTWARE UND KONFIGURATIONSDATEN MIT ZEITÜBERWACHUNG SOWIE ENTSPRECHENDES DATENNETZ**
METHOD FOR DISTRIBUTING SOFTWARE AND CONFIGURATION DATA WITH TIME SUPERVISION, AND CORRESPONDING DATA NETWORK
PROCEDE DE DISTRIBUTION DE LOGICIELS ET DE DONNEES DE CONFIGURATION AVEC CONTROLE TEMPOREL ET RESEAU DE DONNEES CORRESPONDANT

(30) Priorität: 29.09.2004 DE 102004047367
(43) Veröffentlichungstag der Anmeldung: 13.06.2007
(73) Patentinhaber: Siemens Aktiengesellschaft, 80333 München (DE)
(72) Erfinder: BITTERLICH, Jean-Yves, 81549 München (DE)
(86) Internationale Anmeldenummer: PCT/EP2005/054770
(87) Internationale Veröffentlichungsnummer: WO 2006/034994

(56) Entgegenhaltungen:
- WO-A-02/29551
- ALEXANDER KLEMM ET AL: "Peer-to-Peer Computing in Mobile Ad Hoc Networks" LNCS 2965 / MASCOT 2003, [Online] 5. April 2004 (2004-04-05), Seiten 187-208, XP019004533 ISSN: 0302-9743 Gefunden im Internet: URL:http://www.springerlink.com/content/dk wn75ygjec0/> [gefunden am 2006-11-13]

## Beschreibung

Die vorliegende Erfindung betrifft ein Verfahren zum Verteilen von Software und/oder Konfigurationsdaten in einem Datennetz mit mehreren Teilnehmern. Darüber hinaus betrifft die vorliegende Erfindung ein entsprechendes Datennetz mit mehreren Teilnehmern und einer Zentraleinrichtung zum Verteilen der Software bzw. Konfigurationsdaten.

Die Software-Verwaltung spielt eine zentrale Rolle bei jedem Mobilfunknetzbetreiber bzw. Netzwerk-Operator. Bei mehreren Millionen Teilnehmern sehen sich die Betreiber bzw. Operatoren einem enormen Problem gegenüber: Das Ändern und Aktualisieren von Konfigurationen soll bei allen Terminals gleichzeitig oder in einem überschaubaren zeitlichen Rahmen erfolgen können. Während sich die Standardisierungsgremien darauf konzentrieren, wie das Aktualisieren und Ändern der Konfigurationen auf der Netzwerkseite zu managen und auf der Terminalseite durchzuführen ist, wird grundsätzlich offen gelassen, wie die Betreiber und Operatoren die Vielzahl an Triggern und Verbindungen für die Aktualisierungen und Änderungen handhaben sollen.

Die Aufgabe der vorliegenden Erfindung besteht somit darin, ein Verfahren bereitzustellen, mit dem eine Aktualisierung bzw. Änderung der Konfigurationen einer Vielzahl von Terminals einfacher durchgeführt werden kann. Darüber hinaus soll ein entsprechendes Datennetz angegeben werden.

Erfindungsgemäß wird diese Aufgabe gelöst durch ein Verfahren zum Verteilen von Software und/oder Konfigurationsdaten in einem Datennetz mit mehreren Teilnehmern, durch Aufteilen eines zu verteilenden Softwarepakets und/oder Konfigurationsdatenpakets in mindestens einen ersten und einen zweiten Datenblock, Generieren einer Liste aller Datenblöcke des Softwarepakets und/oder Konfigurationsdatenpakets, Senden des ersten Datenblocks und der Liste von einer Zentralstelle an einen ersten der mehreren Teilnehmer, Anfordern des zweiten Datenblocks durch den ersten Teilnehmer von der Zentralstelle nach einem vorgebbaren Zeitpunkt oder nach Ablauf einer vorgebbaren Zeitdauer im Anschluss an den Empfang der Liste und Senden des zweiten Datenblocks von der Zentralstelle an den ersten Teilnehmer.

Darüber hinaus ist erfindungsgemäß vorgesehen ein Datennetz mit mindestens einem ersten und einem zweiten Teilnehmer und einer Zentraleinrichtung zum Verteilen von Software und/oder Konfigurationsdaten, wobei die zu verteilende Software und/oder Konfigurationsdaten in mindestens einem ersten und einem zweiten Datenblock von der Zentraleinrichtung bereitstellbar ist, von der Zentraleinrichtung eine Liste aller Datenblöcke des Softwarepakets und/oder Konfigurationsdatenpakets bereitstellbar ist, von der Zentraleinrichtung der erste Datenblock und die Liste an den ersten Teilnehmer übertragbar ist, durch den ersten Teilnehmer ein vorgebbarer Zeitpunkt oder der Ablauf einer vorgebbaren Zeitdauer nach Empfang der Liste feststellbar und abhängig davon mindestens der zweite Datenblock von der Zentraleinrichtung durch den ersten Teilnehmer anforderbar ist und der zweite Datenblock direkt von der Zentralstelle an den ersten Teilnehmer auf Anforderung übertragbar ist.

Der erfindungsgemäße Vorteil besteht darin, dass mit dem vorgeschlagenen Verfahren bzw. dem vorgeschlagenen Datennetz die Installations- oder Setup-Zeitdauer deutlich verkürzt werden kann. Wenn ein Terminal bzw. ein Teilnehmer nach der vorgegebenen Zeitdauer nicht über alle Datenblöcke verfügt, kontaktiert er einen zentralen Managementserver, um die fehlenden Teile zu erhalten. Dadurch kann beispielsweise die Installation neuer Software in einem zeitlich überschaubaren Rahmen bei allen Teilnehmern erfolgen.

Vorzugsweise sind zumindest einige der Teilnehmer ad-hoc-netzwerkfähig, so dass ein zweiter Teilnehmer mit dem ersten Teilnehmer durch spontane Kommunikation mindestens einen der Datenblöcke der Liste austauschen kann. In vorteilhafter Weise ist es damit möglich, dass die Betreiber und Operatoren nicht mehr alle Geräte bzw. Teilnehmer für die Aktualisierungen und Änderungen der Konfigurationen bzw. Software triggern müssen. Sie müssen lediglich einer Untermenge von Teilnehmern Software oder Konfigurationsdaten zusenden. Dies erspart Energie und Bandbreite und mithin Geld. Speziell kann durch die Aufteilung der zu übertragenden Konfigurationsdaten in Datenblöcke etwa ein Drittel der Verteilungskosten eingespart werden gegenüber einer Standard P2P (Peer-to-Peer)-Software-Verteilung.

Da ein Teilnehmer von der Zentralstelle nicht den vollständigen Satz an Datenblöcken für die Konfiguration erhält, ist er durch die Liste darüber informiert, welche Datenblöcke er von anderen Teilnehmern durch spontane Kommunikation, d. h. mittels P2P-Verbindung bzw. ad hoc-Netzwerk, erhalten kann.

Das Senden des zweiten Datenblocks durch den zweiten Teilnehmer kann bei spontaner Kommunikation auf Anforderung des ersten Teilnehmers erfolgen. Dabei ist der erste Teilnehmer, dem der zweite Datenblock noch fehlt, der aktive Part. Besonders effizient ist es hierfür, wenn der erste Teilnehmer seine Anforderung aufgrund der Liste, die er von der Zentralstelle erhalten hat, an die Teilnehmer stellt, die mit ihm ein ad hoc-Netzwerk bilden.

Das Senden des zweiten Datenblocks kann aber auch automatisch durch den zweiten Teilnehmer erfolgen, wenn er mit dem ersten Teilnehmer die spontane Kommunikation bzw. das ad hoc-Netzwerk aufbaut. Dies bedeutet, dass in diesem Fall der zweite Teilnehmer der aktive Part ist und der erste Teilnehmer lediglich zu entscheiden hat, ob er über den zweiten Datenblock bereits verfügt und ihn gegebenenfalls verwirft.

Die Zeitdauer zum Anfordern des zweiten Datenblocks kann von dem ersten Teilnehmer vorgegeben werden. Dadurch kann jeder Teilnehmer selbst bestimmen, wann er nach Erhalt der Liste die Installation oder den Setup spätestens abgeschlossen haben will.

Der oder die restlichen Datenblöcke können durch den ersten Teilnehmer entsprechend einer anderen Variante auch spätestens dann angefordert werden, wenn dieser eine vorgegebene Anzahl oder einen vorgegebenen Anteil an Datenblöcken bereits zur Verfügung hat und die Zeitdauer abgelaufen ist. Somit kann beispielsweise der größte Teil der Datenblöcke durch spontane Kommunikation und der restliche Teil durch zentrales Versenden über das Datennetz verteilt werden.

Alternativ kann die Zeitdauer oder der Zeitpunkt zum Anfordern des zweiten Datenblocks auch von der Zentralstelle vorgegeben werden. Dabei ist es zweckmäßig, die Zeitdauer oder den Zeitpunkt mit der Liste zu übertragen. Somit kann die Installationszeit von zentraler Stelle fest vorgegeben werden.

Sobald einer der mehreren Teilnehmer über einen vollständigen Satz Datenblöcke verfügt, kann bei ihm eine Installation oder ein Setup gestartet werden. Ob der Satz Datenblöcke vollständig ist oder nicht, kann der Teilnehmer anhand der von der Zentralstelle übermittelten Liste selbst feststellen.

Die spontane Kommunikation kann mittels Bluetooth oder WLAN aufgebaut werden. Somit kann auf bekannte Standards zurückgegriffen werden.

Die vorliegende Erfindung wird nun anhand der beigefügten Zeichnung näher erläutert, die ein erfindungsgemäßes Datennetz prinzipiell wiederspiegelt.

Das nachfolgend näher geschilderte Ausführungsbeispiel stellt eine bevorzugte Ausführungsform der vorliegenden Erfindung dar.

Die erfindungsgemäße Lösung basiert auf einem P2P-Software-Management-Verteilungs-Prinzip mit Teilzustellung. Dabei werden große Datenmengen, die für die Aktualisierung oder Änderung der Software bzw. Konfiguration notwendig sind, in Blöcke geteilt, welche dann an "ausgewählte" Geräte gesendet werden. Hierzu wird jeweils nur ein Datenblock an ein Gerät gesendet.

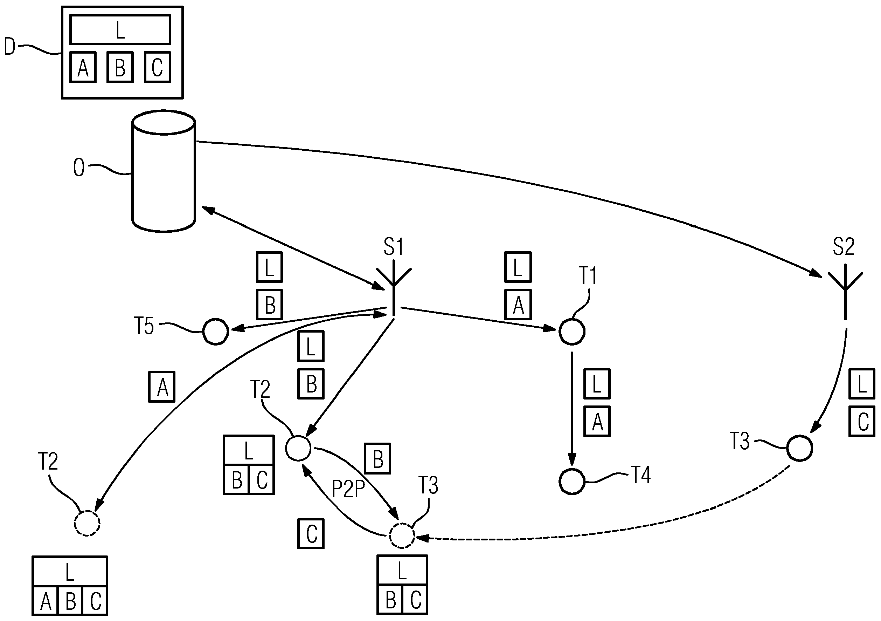

In dem Beispiel von FIG 1 stellt der Operator O einen Datensatz D zur Verfügung, mit dem die Teilnehmer Tl, T2 und T3 eines Mobilfunknetzes neu konfiguriert werden sollen. Dabei sind die Daten des Datensatzes D in Blöcke A, B und C unterteilt. Ferner besitzt der Datensatz D eine Liste L, die ein Skript über sämtliche von den Teilnehmern zu erhaltenden Datenblöcke A, B und C enthält.

Der Operator O sendet nun die einzelnen Datenblöcke A, B und C mit der Liste L über Sendestationen S1 und S2 an die Teilnehmer Tl, T2 und T3. Auch der Teilnehmer T5 wird von der Sendestation S1 beschickt.

Im konkreten Beispiel sendet die Sendestation S1 einen Datenblock A einschließlich der Liste L an den Teilnehmer T1. Des Weiteren sendet die Sendestation S1 einen Datenblock B einschließlich Liste L an einen Teilnehmer T2. Die andere Sendestation S2 sendet einen Datenblock C einschließlich Liste L an einen Teilnehmer T3. Die Begrenzung auf wenige Teilnehmer und Sendestationen ist hier rein willkürlich gewählt. Grundsätzlich kann die Anzahl an Sendestationen und Teilnehmern beliebig hoch gewählt werden.

Weiterhin überträgt die Sendestation S1 auch an einen Teilnehmer T5 den Datenblock B einschließlich Liste L. Über spontane Kommunikation sendet auch der Teilnehmer T1 den von der Sendestation S1 erhaltenen Datenblock A mit Liste L weiter an einen Teilnehmer T4. Auf diese Weise können die Daten nicht nur über die Sendestationen S1 und S2, sondern auch ähnlich dem Verbreitungsprinzip von Viren unter den Teilnehmern selbst weitertransportiert werden.

Da die Teilnehmer, die neue Daten erhalten haben, auch eine Liste L erhielten, die über sämtliche notwendigen Datenblöcke informiert, wissen die Teilnehmer auch, welche Datenblöcke ihnen noch fehlen. Um jedoch das Datennetz nicht unnötig mit der Weitergabe von Konfigurationsdaten zu belegen, ist erfindungsgemäß ein zusätzlicher Verbreitungsmechanismus vorgesehen. Wenn sich nämlich ein Teilnehmer auf einen anderen zu bewegt (im Beispiel der FIG bewegt sich der Teilnehmer T3 auf den Teilnehmer T2 zu) können beide, wenn sie sich entsprechend nahe sind, ein ad hoc-Netzwerk bzw. eine P2P-Verbindung über Bluetooth oder WLAN aufbauen. Über diese Kommunikationsverbindung lassen sich dann die Konfigurationsdatenblöcke austauschen. Im vorliegenden Fall sendet der Teilnehmer T2 an den Teilnehmer T3 den Datenblock B und der Teilnehmer T3 an den Teilnehmer T2 den Datenblock C. Dies geschieht entweder dadurch, dass der Teilnehmer T3 automatisch den Datenblock C abschickt, wenn eine P2P-Verbindung mit einem anderen Teilnehmer aufgebaut ist. In gleicher Weise könnte der Teilnehmer T2 automatisch den Datenblock B abschicken, wenn mit einem anderen Teilnehmer diese P2P-Verbindung aufgebaut ist.

Alternativ kann jeder Teilnehmer die Liste L ausnutzen, da er mit ihr weiß, welche Datenblöcke ihm für den vollständigen Konfigurationsdatensatz noch fehlen. Im vorliegenden Beispiel hieße dies, dass der Teilnehmer T2 beim Teilnehmer T3 anfragt, ob er über den Datenblock A oder C verfügt. Da der Teilnehmer T3 den Datenblock C besitzt, sendet dieser den Datenblock C an den Teilnehmer T2. Gleiches gilt für die Übertragung des Datenblocks B vom Teilnehmer T2 an den Teilnehmer T3. Letztlich verfügen beiden Teilnehmer T2 und T3 jeweils über beide Datenblöcke B und C. Es ist dann lediglich abzuwarten, bis einer der beiden Teilnehmer T2 und T3 beispielsweise mit dem Teilnehmer T1 oder T4 in Berührung kommen, so dass er den restlichen Datenblock A erhalten kann.

Durch diese virenartige Verbreitung von Datenblöcken für die Konfiguration oder sonstige Softwareaktualisierung wird das Datennetz weniger belastet, so dass weniger Bandbreite für das Software-Management notwendig ist. Die Übertragung der Datenblöcke wird vielmehr durch ad hoc-Verbindungen zwischen den Geräten gewährleistet. Dieses Prinzip ist besonders für große zu verteilende Datenmengen wirtschaftlich interessant.

Eine ähnliche Verbreitungsmethode ist bereits aus dem Dokument "Peer-to-Peer Computing in Mobile Ad Hoc Networks" von ALEXANDER KLEMM ET AL. , 5. April 2004 (2004-04-05) Seiten 187-208, XP019004533 bekannt, in dem ein "lookup service" für Mobile-Applikationen offenbart wird. Für die Implementierung dieses lookup services wird eine Index-Datenstruktur benutzt, in der jeweils ein paarweiser Index-Eintrag gespeichert wird, nämlich ein Schlüssel k und ein Wert v. Im Falle eines file sharing systems wird der Schlüssel mit einem Datei-Namen assoziiert und der Wert v stellt eine Referenz auf die zugehörige Datei dar. Für die Ausbreitung der genannten Index-Einträge wird eine "epidemic dissemination"-Methode benutzt.

Damit die Verteilung der Datenblöcke nicht beliebig lange dauert, sondern ein vollständiger Satz an Datenblöcken nach einer bestimmten Zeit für jeden Teilnehmer verfügbar ist, wird die Datenverteilung erfindungsgemäß zeitlich überwacht. Dies erfolgt beispielsweise dadurch, dass in dem jeweiligen Teilnehmer eine vorgebbare Zeitdauer abgespeichert ist. Nach Ablauf dieser Zeitdauer im Anschluss an den Empfang der Liste L muss der Teilnehmer den Operator O kontaktieren, um die restlichen Datenblöcke direkt von ihm anzufordern. In dem konkreten Beispiel der FIG verfügt der Teilnehmer T2 nach der vorgegebenen Zeit noch nicht über den Datenblock A. Dass ihm der Datenblock A noch fehlt, weiß er aus der Liste L. Daher kontaktiert er den Operator O über die Sendestation S1. Daraufhin sendet der Operator O den fehlenden Datenblock A an den Teilnehmer T2. Der Teilnehmer T2 hat damit einen vollständigen Datensatz und kann die Installation beginnen.

Die vorgegebene Zeitdauer, nach der ein Teilnehmer nach dem Empfang der Liste L den Operator O bzw. die entsprechende Zentralstelle kontaktiert, kann in dem Terminal bzw. Teilnehmer fest vorprogrammiert sein. Alternativ kann die Zeitdauer auch von dem Operator O an den jeweiligen Teilnehmer in einem Skript mit der Liste L übertagen werden. Dabei kann die Zeitdauer, z. B. fünf Tage, fest vorgegeben werden. Alternativ kann als "Zeitdauer" auch ein Zeitpunkt, z. B. der 1. November, vorgegeben werden.

Entsprechend einer anderen Variante kann vorgeschrieben werden, dass der Teilnehmer dann die restlichen Datenblöcke anfordern muss, wenn er bereits über eine Mindestmenge an Datenblöcken verfügt. In diesem Fall muss er beispielsweise den Operator O dann kontaktieren, wenn er beispielsweise bereits 60 % der erforderlichen Datenblöcke besitzt.

Auch eine Kombination dieser Anforderungsbedingungen kann im konkreten Fall günstig sein. So kann beispielsweise dann eine Anforderung ausgelöst werden, wenn der Teilnehmer bereits 60 % der erforderlichen Datenblöcke zur Verfügung hat, aber die fehlenden Datenblöcke in den letzten fünf Tagen von anderen Teilnehmern nicht übermittelt bekommen hat.

Zum Anfordern der restlichen Datenblöcke kontaktiert der Teilnehmer bzw. das Terminal eine spezielle Server-URL. Daraufhin erhält er über das Datennetz direkt vom Operator O, gegebenenfalls auch von einem anderen Teilnehmer, den oder die fehlenden Datenblöcke.

### Bezugszeichenliste

- A, B, C: Datenblöcke
- D: Datensatz
- L: Liste
- O: Operator
- P2P: Peer-to-Peer-Verbindung
- S1, S2: Sendestationen
- Tl, T2, T3, T4, T5: Teilnehmer

## Patentansprüche

1. Verfahren zum Verteilen eines Datensatzes, der Software und/oder Konfigurationsdaten beinhaltet, an die Teilnehmerstationen (T1 bis T5) eines Datennetzes,
**gekennzeichnet durch**
- Aufteilen eines zu verteilenden Datensatzes in mehrere Datenblöcke (A, B, C),
- Generieren einer Liste (L) aller Datenblöcke des Datensatzes,
- Initialisieren der Verteilung des Datenpakets, indem mindestens eine Sendestation des Datennetzes die Datenblöcke des Datensatzes an ausgewählte Teilnehmerstationen des Datennetzes sendet, wobei jeweils ein Datenblock zusammen mit der genannten Liste an eine ausgewählte Teilnehmerstation gesendet wird,
- Fortsetzen der Verteilung des Datensatzes unter den ausgewählten Teilnehmerstationen und den übrigen Teilnehmerstationen des Datennetzes mithilfe von ad-hoc-Verbindungen zwischen den Teilnehmerstationen,
- Kontaktieren einer Zentralstelle (O) durch eine Teilnehmerstation, die nach einem vorgebbaren Zeitpunkt oder nach Ablauf einer vorgegebbaren Zeitdauer im Anschluss an den Empfang der Liste (L) noch immer nicht alle Datenblöcke des Datensatzes empfangen hat, um von der Zentralstelle (0) den bzw. die restlichen Datenblöcke des Datensatzes anzufordern.

2. Verfahren nach Anspruch 1, wobei der genannte Zeitpunkt oder die genannte Zeitdauer in der genannten Teilnehmerstation fest vorprogrammiert wird.

3. Verfahren nach Anspruch 1 , wobei der genannte Zeitpunkt oder die genannte Zeitdauer von der Zentralstelle (O) vorgegeben wird.

4. Verfahren nach Anspruch 3, wobei der genannte Zeitpunkt oder die genannte Zeitdauer mit der Liste übertragen wird.

5. Verfahren nach Anspruch 1,
dass eine Teilnehmerstation, eine Zentralstelle kontaktiert, um den bzw. die restlichen Datenblöcke des Datensatzes anzufordern, wenn die Teilnehmerstation eine vorgegebene Anzahl oder einen vorgegebenen Anteil an Datenblöcken bereits zur Verfügung hat.

6. Verfahren nach Anspruch 1,
dass eine Teilnehmerstation, eine Zentralstelle kontaktiert, um den bzw. die restlichen Datenblöcke des Datensatzes anzufordern, wenn die Teilnehmerstation eine vorgegebene Anzahl oder einen vorgegebenen Anteil an Datenblöcken bereits zur Verfügung hat und die genannte Zeitdauer abgelaufen ist.

7. Verfahren nach einem der vorhergehenden Ansprüche mit dem weiteren Schritt des Startens einer Installation oder eines Setups, wenn einer der mehreren Teilnehmer über einen vollständigen Satz Datenblöcke (A, B, C) verfügt.

8. Verfahren nach einem der vorhergehenden Ansprüche, wobei die spontane Kommunikation (P2P) mittels Bluetooth oder WLAN aufgebaut wird.

9. Datennetz mit
- mehreren Teilnehmerstationen (T1 bis T5),
- einer Zentraleinrichtung (O) zum Verteilen eines Datensatzes, der Software und/oder Konfigurationsdaten für die Teilnehmerstationen (T1 bis T5) beinhaltet,
**dadurch gekennzeichnet, dass**
- die Zentraleinrichtung (O) den zu verteilenden Datensatz in mehrere Datenblöcke aufgeteilt bereitstellt,
- die Zentraleinrichtung (O) eine Liste (L) aller Datenblöcke des Datensatzes bereitstellt,
- die Zentraleinrichtung (O) veranlasst, dass die Datenblöcke des Datensatzes mithilfe mindestens einer Sendestation an ausgewählte Teilnehmerstationen des Datennetzes gesendet werden, wobei jeweils ein Datenblock zusammen mit der genannten Liste an eine ausgewählte Teilnehmerstation gesendet wird,
- die ausgewählten Teilnehmerstationen die Fortsetzung der Verteilung des Datensatzes unter den ausgewählten Teilnehmerstationen und den übrigen Teilnehmerstationen des Datennetzes mithilfe von ad-hoc-Verbindungen zwischen den Teilnehmerstationen durchführen,
- eine Teilnehmerstation, die nach einem vorgebbaren Zeitpunkt oder nach Ablauf einer vorgegebbaren Zeitdauer im Anschluss an den Empfang der Liste (L) noch immer nicht alle Datenblöcke des Datensatzes empfangen hat, die Zentraleinrichtung (O) den bzw. die restlichen Datenblöcke des Datensatzes anzufordern.

10. Datennetz nach Anspruch 9, wobei zumindest einige der mehreren Teilnehmerstationen (T1 bis T5) ad-hoc-netzwerkfähig sind.

11. Datennetz nach Anspruch 9 oder 10, wobei die genannte Zeitdauer zum Anfordern des bzw. der restlichen Datenblöcke des Datensatzes in einer Teilnehmerstation fest vorprogrammiert ist oder mit der Liste übertragen wird.

12. Datennetz nach Anspruch 11, wobei von dem Teilnehmer (T2) der Teilnehmerstation die Zeitdauer mit der Anzahl der Datenblöcke, die der erste Teilnehmer (T2) von der Liste bereits hat, für die Ermittlung eines Anforderungszeitpunkts verknüpfbar ist.

13. Datennetz nach Anspruch 9 oder 10, wobei die Zeitdauer oder der Zeitpunkt zum Anfordern des zweiten Datenblocks (A) von der Zentralstelle (O) vorgebbar ist.

14. Datennetz nach Anspruch 8 oder 9, wobei die Zeitdauer oder der Zeitpunkt mit der Liste (L) übertragbar ist.

15. Datennetz nach einem der Ansprüche 9 bis 14, wobei in einer Teilnehmerstation eine Installation oder ein Setup automatisch startbar ist, wenn die Teilnehmerstation über einen vollständigen Satz Datenblöcke (A, B, C) verfügt.

16. Datennetz nach einem der Ansprüche 9 bis 15, wobei die spontane Kommunikation (P2P) zwischen den Teilnehmern mittels Bluetooth oder WLAN aufbaubar ist.

## Claims

1. Method for distributing a data set, which contains software and/or configuration data, to the subscriber stations (T1 to T5) in a data network,
**characterised by**
- subdividing a data set that is to be distributed into a plurality of data blocks (A, B, C),
- generating a list (L) of all data blocks in the data set,
- initialising the distribution of the data package, in that at least one transmitting station in the data network sends the data blocks in the data set to selected subscriber stations in the data network, wherein in each case a data block is sent to a selected subscriber station together with the said list,
- continuing the distribution of the data set among the selected subscriber stations and the remaining subscriber stations in the data network with the aid of ad-hoc connections between the subscriber stations,
- contacting of a control centre (0) by a subscriber station which has still not received all data blocks in the data set after a predefinable time point or on expiry of a predefinable time period subsequent to the receipt of the list (L), in order to request the remaining data block(s) in the data set from the control centre (0).

2. Method according to claim 1, wherein the said time point or the said time period is permanently preprogrammed in the said subscriber station.

3. Method according to claim 1, wherein the said time point or the said time period is predefined by the control centre (0).

4. Method according to claim 3, wherein the said time point or the said time period is transmitted with the list.

5. Method according to claim 1, wherein a subscriber station contacts a control centre, in order to request the remaining data block(s) in the data set, if the subscriber station already has a predefined number or a predefined percentage of data blocks available.

6. Method according to claim 1, wherein a subscriber station contacts a control centre, in order to request the remaining data block(s) in the data set, if the subscriber station already has a predefined number or a predefined percentage of data blocks available and the said time period has elapsed.

7. Method according to one of the preceding claims, comprising the further step of starting an installation or setup when one of the plurality of subscribers has a full set of data blocks (A, B, C).

8. Method according to one of the preceding claims, wherein the spontaneous communication (P2P) is set up by means of Bluetooth or WLAN.

9. Data network having
- a plurality of subscriber stations (T1 to T5),
- a central device (0) for distributing a data set, which contains software and/or configuration data for the subscriber stations (T1 to T5),
**characterised in that**
- the central device (0) provides the data set to be distributed subdivided into a plurality of data blocks,
- the central device (0) provides a list (L) of all data blocks in the data set,
- the central device (0) arranges for the data blocks in the data set to be sent with the aid of at least one transmitting station to selected subscriber stations in the data network, wherein in each case a data block is sent to a selected subscriber station together with the said list,
- the selected subscriber stations perform the continuation of the distribution of the data set among the selected subscriber stations and the remaining subscriber stations in the data network with the aid of ad-hoc connections between the subscriber stations,
- a subscriber station which has still not received all data blocks in the data set after a predefinable time point or on expiry of a predefinable time period subsequent to the receipt of the list (L) requests the remaining data block(s) in the data set from the central device (0).

10. Data network according to claim 9, wherein at least some of the plurality of subscriber stations (T1 to T5) are ad-hoc network-capable.

11. Data network according to claim 9 or 10, wherein the said time period for requesting the remaining data block(s) in the data set is permanently preprogrammed in a subscriber station or is transmitted with the list.

12. Data network according to claim 11, wherein the subscriber (T2) of the subscriber station can link the time period with the number of data blocks that the first subscriber (T2) already has from the list for the purpose of determining a time point for issuing the request.

13. Data network according to claim 9 or 10, wherein the time period or the time point for requesting the second data block (A) can be predefined by the control centre (0).

14. Data network according to claim 8 or 9, wherein the time period or the time point can be transmitted with the list (L).

15. Data network according to one of claims 9 to 14, wherein an installation or setup can be started automatically in one subscriber station if the subscriber station has a full set of data blocks (A, B, C).

16. Data network according to one of claims 9 to 15, wherein the spontaneous communication (P2P) between the subscribers can be set up by means of Bluetooth or WLAN.

## Revendications

1. Procédé de distribution d'un ensemble de données qui comprend des logiciels et/ou des données de configuration, aux stations d'abonnés (T1 à T5) d'un réseau de données,
**caractérisé par**
- la division d'un ensemble de données à distribuer en plusieurs blocs de données (A, B, C),
- la génération d'une liste (L) de tous les blocs de données de l'ensemble de données,
- l'initialisation de la distribution du paquet de données par le fait qu'au moins une station émettrice du réseau de données envoie les blocs de données de l'ensemble de données à des stations d'abonnés sélectionnées du réseau de données, chacun des blocs de données étant envoyé avec ladite liste à une station d'abonné sélectionnée,
- la poursuite de la distribution de l'ensemble de données parmi les stations d'abonnés sélectionnées et les autres stations d'abonnés du réseau de données à l'aide de connexions ad hoc entre les stations d'abonnés,
- l'entrée en contact avec un central (0) par une station d'abonné qui après un moment prédéterminable ou après l'écoulement d'une durée prédéterminable suivant la réception de la liste (L), n'a toujours pas reçu tous les blocs de données de l'ensemble de données, pour demander au central (0) le ou les blocs de données restants de l'ensemble de données.

2. Procédé selon la revendication 1, ledit moment ou ladite durée étant préprogrammé(e) de manière fixe dans ladite station d'abonné.

3. Procédé selon la revendication 1, ledit moment ou ladite durée étant prédéterminé(e) par le central (0).

4. Procédé selon la revendication 3, ledit moment ou ladite durée étant transmis(e) avec la liste.

5. Procédé selon la revendication 1,
**caractérisé en ce qu'**une station d'abonné contacte un central pour demander le ou les blocs de données restants de l'ensemble de données lorsque la station d'abonné dispose déjà d'un nombre prédéterminé ou d'une part prédéterminée de blocs de données.

6. Procédé selon la revendication 1,
**caractérisé en ce qu'**une station d'abonné contacte un central pour demander le ou les blocs de données restants de l'ensemble de données lorsque la station d'abonné dispose déjà d'un nombre prédéterminé ou d'une part prédéterminée de blocs de données et que ladite durée s'est écoulée.

7. Procédé selon l'une des revendications précédentes comprenant l'étape supplémentaire du lancement d'une d'installation ou d'un setup lorsque l'un des plusieurs abonnés dispose d'un ensemble complet de blocs de données (A, B, C).

8. Procédé selon l'une des revendications précédentes, la communication spontanée (P2P) étant établie au moyen de Bluetooth ou WLAN.

9. Réseau de données comprenant
- plusieurs stations d'abonnés (T1 à T5),
- un dispositif central (0) pour distribuer un ensemble de données qui comprend des logiciels et/ou des données de configuration pour les stations d'abonnés (T1 à T5), **caractérisé en ce que**
- le dispositif central (0) fournit l'ensemble de données à distribuer divisé en plusieurs blocs de données,
- le dispositif central (0) génère une liste (L) de tous les blocs de données de l'ensemble de données,
- le dispositif central (0) fait envoyer les blocs de données de l'ensemble de données à l'aide d'au moins une station émettrice à des stations d'abonnées sélectionnées du réseau de données, chacun des blocs de données étant envoyé avec ladite liste à une station d'abonné sélectionnée,
- les stations d'abonnés sélectionnées poursuivent la distribution de l'ensemble de données parmi les stations d'abonnés sélectionnées et les autres stations d'abonnés du réseau de données à l'aide de connexions ad hoc entre les stations d'abonnés,
- une station d'abonné qui après un moment prédéterminable ou après l'écoulement d'une durée prédéterminable suivant la réception de la liste (L) n'a toujours pas reçu tous les blocs de données de l'ensemble de données, contacte le dispositif central (0) pour demander le ou les blocs de données restants de l'ensemble de données.

10. Réseau de données selon la revendication 9, au moins certaines des plusieurs stations d'abonnés (T1 à T5) peuvent être connectées à un réseau ad hoc.

11. Réseau de données selon la revendication 9 ou 10, ladite durée pour demander le ou les blocs de données restants de l'ensemble de données étant préprogrammée de manière fixe dans une station d'abonné ou étant transmise avec la liste.

12. Réseau de données selon la revendication 11, l'abonné (T2) de la station d'abonné pouvant combiner ladite durée avec le nombre de blocs de données de la liste dont dispose déjà le premier abonné, pour déterminer un moment pour la demande.

13. Réseau de données selon la revendication 9 ou 10, ladite durée ou ledit moment pour demander le deuxième bloc de données (A) pouvant être prédéterminé(e) par le central (0).

14. Réseau de données selon la revendication 8 ou 9, ladite durée ou ledit moment pouvant être transmis (e) avec la liste (L) .

15. Réseau de données selon l'une des revendications 9 à 14, une
installation ou un setup pouvant être automatiquement lancé(e) dans une station d'abonné lorsque la station d'abonné dispose d'un ensemble complet de blocs de données (A, B, C).

16. Réseau de données selon l'une des revendications 9 à 15, la communication spontanée (P2P) entre les abonnés pouvant être établie au moyen de Bluetooth ou WLAN.
